# EUROPEAN PATENT SPECIFICATION

(11) **EP 1 419 641 B1**
(45) Date of publication and mention of the grant of the patent: **01.08.2007**
(21) Application number: 02755263.7
(22) Date of filing: 27.08.2002
(51) Int. Cl.: H04L 29/12

(54) **SYSTEM AND METHOD OF COORDINATING NETWORK EVENTS**
SYSTEM UND VERFAHREN ZUM KOORDINIEREN VON NETZEREIGNISSEN
SYSTÈME ET PROCEDE DE COORDINATION D'EVENEMENTS DE RESEAU

(30) Priority: 24.08.2001 EP 01307239
(43) Date of publication of application: 19.05.2004
(73) Proprietor: BRITISH TELECOMMUNICATIONS public limited company, London EC1A 7AJ (GB)
(72) Inventor: KING, John Robert, Woodbridge, Suffolk IP12 3SD (GB); MOTTRAM, Stephen Willis, Ipswi ch Suffolk IP1 4BY (GB)
(86) International application number: PCT/GB2002/003957
(87) International publication number: WO 2003/019906

(56) References cited:
- WO-A-00/67446
- JIM BOUND, LAURENT TOUTAIN, FRANCIS DUPONT, HOSSAM AFIFI, ALAIN DURAND: "Dual Stack Transition Mechanism (DSTM)" INTERNET-DRAFT, [Online] October 2000 (2000-10), pages 1-19, XP002191667 Retrieved from the Internet: <URL:http://www.ietf.org/proceedings/00dec /I-D/draft-ietf-ngtrans-dstm-03.txt> [retrieved on 2002-02-28] cited in the application

## Description

This invention relates to coordination of network events, and has particular, but not exclusive, application in coordinating Internet Protocol address management events.

Currently all commercial Internet Protocol (lP) networks are IP version 4 (lPv4) networks; however, at some point in the future, commercial IP networks will be IP version 6 (lPv6) networks. In the meantime there will be a transitory period, during which commercial IP networks will comprise a mixture of lPv4 and lPv6 networks. lPv6 is a totally different protocol to lPv4 and is fundamentally incompatible with lPv4. Therefore, during the transitory period at least, network devices and/or networks will require mechanisms to enable a node and/or host in an lPv4 network, having an lPv4 address, to communicate with a node and/or host in an lPv6 network, having an lPv6 address.

Several migration mechanisms have been developed; see for example a document published in November 2000 by the Internet Engineering Task Force (lETF) and available from the IETF at http://www.ietf.org/internet-drafts/draft-ietf-ngtrans-introduction-to-ipv6-transition-05.txt, entitled "An Overview of the Introduction of IPv6 in the Internet", authors: W. Biemolt et al, IETF Status: Draft working towards Informational RFC.

One particular migration method, known as Dual Stack Transition Mechanism (DSTM), enables hosts to send and receive both lPv4 and lPv6 data. This mechanism is typically used when a host, located in an lPv6 network, is running one or more lPv4 applications, and thus needs to communicate with hosts located in an lPv4 network. Such a host is hereinafter referred to as a dual stack host. A feature of the DSTM method is that IPv4 packets are encapsulated into lPv6 packets when they leave the dual stack host, and are subsequently un-encapsulated by a router, which is located on the boundary of the lPv4 and IPv6 networks.

The dual stack host is assigned an lPv4 address, which is used as an alias for the dual stack host and forms the source address of the encapsulated packet. This assigned IPv4 address is "leased" to the dual stack host for a specified period, after which it can either be renewed or released for use by another dual stack host.

A problem with the DSTM method is that the renewal and release information is typically not conveyed to the router in a timely fashion, so that packets can get misdirected, and/or dropped and snooped en route for their intended dual stack host destination.

According to a first aspect of the present invention there is provided a method of coordinating address allocation events at a routing device and at a host machine, where the routing device is arranged to route data between the host machine and at least one other host machine, in which the host machine is located in a first network, the first network operating in accordance with a first transmission protocol, and in which the other host machine is located in a second network, the second network operating in accordance with a second transmission protocol, and wherein the host machine is operable to process packets of data corresponding to either transmission protocols,. The method comprises the steps of:
receiving an allocated address, for use by the host machine in communicating with the other host machine;
receiving an indicator representative of allocation status of the allocated address;
sending, to the routing device, the allocated address together with the address of the host machine;
storing a mapping between the allocated address and the address of the host machine;
monitoring the indicator, and, if the indicator indicates that the allocated address is no longer valid for the host machine,
rendering the stored mapping unusable by the routing device.

Preferably the method includes using the mapping to establish a tunnel between the routing device and the host machine, the tunnel being used in the said routing of data between the host machine and the other host machine.

Conveniently the method further includes requesting renewal of the allocated address if the indicator indicates that the allocated address is no longer valid for the host machine.

Advantageously the method includes checking at least one interface of the host in order to determine whether the allocated address is to be renewed. This essentially provides a means of establishing whether the host is in the course of sending and/or receiving data.

Conveniently the rendering step causes the stored mapping to be deleted from the routing device, so that the tunnel is removed.

According to a second aspect of the invention there is provided apparatus for carrying out the afore-described method. The apparatus is preferably distributed between devices and the routing device, so that at least some of the functionality provided by the apparatus may be located on the host machine; on the routing device; on a bespoke device, which is located in the first network; or distributed between a device that is arranged to issue the allocated address and the host machine. The device that is arranged to allocate addresses to requesting host machines is preferably a dynamic host configuration protocol server.

In the following description the term "host" is used; this is defined as follows:
"host" - any computer that has two-way access to other computers in a network such as the Internet or an Intranet. Examples of hosts include clients, routers, switches, and servers.

Further aspects and advantages of the present invention will be apparent from the following description of preferred embodiments of the invention, which are given by way of example only and with reference to the accompanying drawings, in which
Figure 1 is a schematic diagram of a network, within which embodiments of the invention operate;
Figure 2 is a flow diagram showing operation of the known Dual Stack Transition Mechanism;
Figure 3 is a schematic diagram of components of a device comprising part of the network of Figure 1;
Figure 4 is a schematic flow diagram showing processes involved in communication between a dual stack host, located in a first network, and a host located in a second network, incorporating aspects of a first embodiment of the invention;
Figure 5 is a schematic flow diagram showing processes involved in coordination aspects of a first embodiment of the invention;
Figure 6 is a schematic flow diagram showing further processes involved in coordination aspects of a first embodiment of the invention;
Figure 7 is a schematic flow diagram showing yet further processes involved in coordination aspects of a first embodiment of the invention;
Figure 8 is a schematic flow diagram showing further processes involved in coordination aspects of a first embodiment of the invention;
Figure 9 is a schematic flow diagram showing processes involved in coordination aspects of a first embodiment of the invention;
Figure 10 is a schematic flow diagram showing processes involved in further coordination aspects of a first embodiment of the invention;
Figure 11 is a schematic flow diagram showing processes involved in aspects of address allocation without embodiments of the invention;
Figure 12 is a schematic flow diagram showing processes involved in further aspects of address allocation without embodiments of the invention,
Figure 13 is a schematic diagram showing the components of Figure 3 arranged according to another embodiment of the invention;
Figure 14 is a schematic flow diagram showing processes involved in communication between a dual stack host, located in a first network, and a host located in a second network, incorporating aspects of the embodiment of Figure 13;
Figure 15 is a schematic flow diagram showing further processes involved in coordination aspects of the embodiment of Figure 13;
Figure 16 is a schematic flow diagram showing yet further processes involved in coordination aspects of the embodiment of Figure 13; and
Figure 17 is a schematic diagram showing the components of Figure 3 arranged according to yet another embodiment of the invention.

Embodiments of the invention are concerned with issues relating to migration from lPv4 to lPv6 networks. Specifically, embodiments of the invention are concerned with enabling communications between an lPv4 application, which is running on a host located within an lPv6 network, and a corresponding lPv4 application running within an IPv4 network.

One embodiment of the invention is concerned with a transition mechanism known as Dual Stack Transition Mechanism (DSTM), which is documented by the Internet Engineering Task Force (IETF) in document draft-ietf-ngtrans-dstm-04.txt (Note that this document is referenced by its given title at August 2001; as is common with IETF publications, the title may subsequently change, so the reader should refer to the IETF in case of doubt), available from the IETF. Hosts that run DSTM have both an lPv4 and an lPv6 stack therein, meaning that data to be transported in accordance with the lPv4 protocol passes through the lPv4 stack (or layer), and data to be transported in accordance with the IPv6 protocol passes through the IPv6 stack, for processing thereby.

Accordingly, incoming and outgoing IPv4 and IPv6 packets are respectively routed via an IPv4 or an lPv6 part of the stack. Thus when operating in accordance with DSTM, a host running DSTM can be located in an lPv6 network and retain its IPv4 functionality.

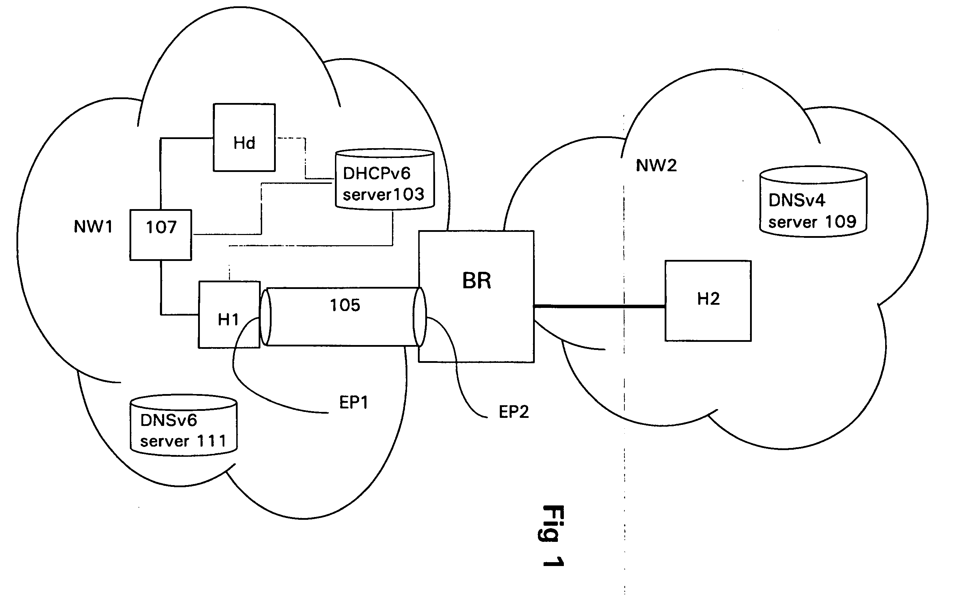

Figure 1 shows an implementation of DSTM in operation between a first network NW1, operating in accordance with a first transmission protocol and a second network NW2, operating in accordance with a second transmission protocol. In this example the first network is an IPv6 network and the second network is an IPv4 network.

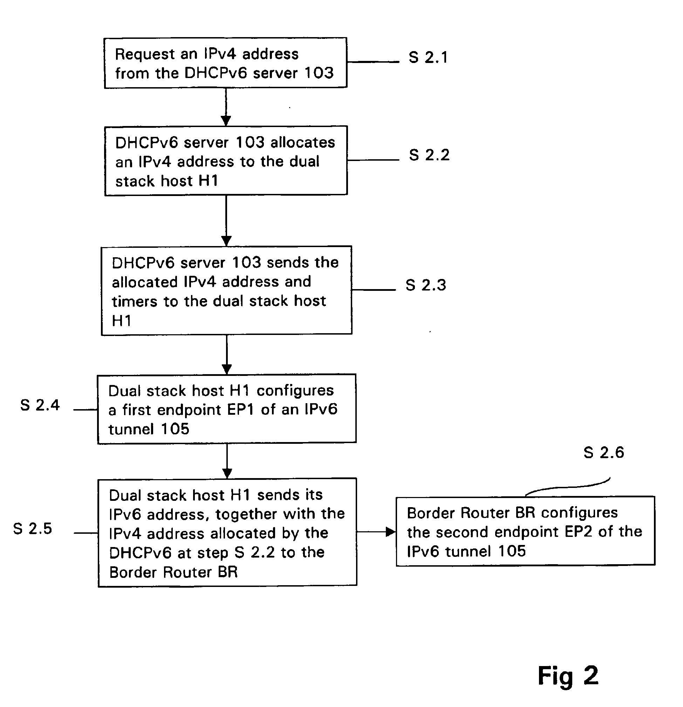

Conventional operation of DSTM is shown in Figure 2. As is known in the art, when a dual stack host H1 in the lPv6 network NW1 participates in lPv4 communication, an lPv4 address is dynamically allocated to the dual stack host H1 by an address pool. The address pool is provided by lPv6 Dynamic Host Configuration Protocol (DCHPv6) server 103, which stores a pool of lPv4 addresses that it leases to other machines in the network upon request.

Accordingly, at step S 2.1 the dual stack host H1 makes a request to the DHCPv6 server for an IPv4 address. At step S 2.2 the DHCPv6 server 103 responds by allocating an IPv4 address to the dual stack host H1, and then, at step S 2.3, sends the allocated IPv4 address to the dual stack host H1. This allocated address is accompanied by two timeout values: *preferred* and *valid,* which are respectively renewable and non-renewable address timeouts. Upon expiry of a *preferred* type timeout, if the dual stack host H1 wishes to continue participating in outgoing communications, it must request renewal of the address allocated thereto; upon expiry of the *valid* type timeout the allocated address cannot be renewed for any type of communication. If the preferred timer is renewed, both the *preferred* and the *valid* timers are simultaneously refreshed.

For the dual stack host H1 to send information to, or receive information from, one or more hosts located in one or more IPv4 networks, a tunnel, connecting the dual stack host H1 with a Border Router BR, which is located between the two types of networks NW1, NW2, has to be created. As is known in the art, the phrase "tunnelling" is used to refer to a process whereby a packet is encapsulated within another packet; in the known method, as indeed in embodiments of the present invention, IPv4 packets are encapsulated within IPv6 packets. Thus a tunnel is the means for performing the tunnelling process, and essentially comprises access points, termed end points and described below, for performing packet-encapsulation.

As is known to those in the art, a tunnel can be either manually or automatically configured; there are several known tunnelling methods, including 6to4, 6 over 4, dynamic tunnelling, tunnel brokering and a method developed by the applicant, which is described in copending published patent application W001 /22683 (applicants' case ref A25800). For more information the reader is referred to the following documents "Request for comments number RFC2529"; draft-ietf-ngtrans-6to4-02.txt (or RFC3056); draft-ietf-ngtrans-dstm-04.txt; draft-ietf-ngtrans-broker-OO.txt (or RFC3053), all available from the IETF. (Note that these documents are referenced by their given titles at August 2001; as is common with IETF publications, the title may subsequently change, so the reader should refer to the IETF in case of doubt).

Accordingly at step S 2.4 the dual stack host H1 configures a first endpoint EP1 of an lPv6 tunnel 105. At step S 2.5 the dual stack host H1 sends its lPv6 address, together with the lPv4 address allocated by the DHCPv6 at step S 2.2, to the Border Router BR, to enable the Border Router BR to configure a second endpoint EP2 of the lPv6 tunnel 105 (when the dual stack host H1 sends its first packet destined for an lPv4 host H2).

Then at step S 2.6 the Border Router BR configures the second endpoint EP2 of the lPv6 tunnel 105, so that lPv4 packets can be tunnelled through the lPv6 network NW1 between the two endpoints EP1, EP2.

Management of address allocation is essentially performed by the dual stack host H1, so that, if the preferred timeout has expired, and the dual stack host H1 is still in the process of communicating with an IPv4 host H2 in the lPv4 network NW2, the dual stack host H1 has to initiate renewal of the address and timer.

The current DSTM draft (draft-ietf-ngtrans-dstm-04.txt) does not address timing issues, in particular coordinating the renewal and release of address allocation between the dual stack host and the Border Router BR. A problem can arise if the dual stack host H1 has finished communicating with the lPv4 host H2 and has released the lPv4 address allocated at step S 2.2 without informing the Border Router BR. If the DHCPv6 server 103 thereafter allocates the lPv4 address to another dual stack host Hd, and the Border Router BR has not modified the second tunnel endpoint EP2, the second endpoint EP2 will be "pointing" to the wrong dual stack host (because the tunnel will point to the lPv6 address of host H1, instead of to the lPv6 address of the newly allocated host Hd).

Embodiments of the invention are therefore concerned with coordinating allocation and release of lPv4 addresses, specifically ensuring that tunnel endpoints EP1, EP2 only exist for the lifetime of the lPv4 address allocation. This has a first advantage that, in the event of expiry of a timer or explicit cancellation of the address allocation on the part of the dual stack host H1, the tunnel endpoints EP1, EP2 are released, and a second advantage that, in the event that the dual stack host H1 renews the lPv4 address allocation upon expiry of the timer, embodiments ensure that correct tunnel endpoints EP1, EP2 are retained.

In a first embodiment the coordination of address allocation between the dual stack host and Border Router BR, each forming a respective end of the tunnel 105, is controlled by the dual stack host at the first tunnel endpoint EP1. This has the benefit of minimising network traffic, because information is only sent to the Border Router BR when there is a change to the tunnel. In other embodiments the coordination of address allocation between the dual stack host and Border Router BR is controlled by the Border Router BR or by an independent device located in the first network NW1.

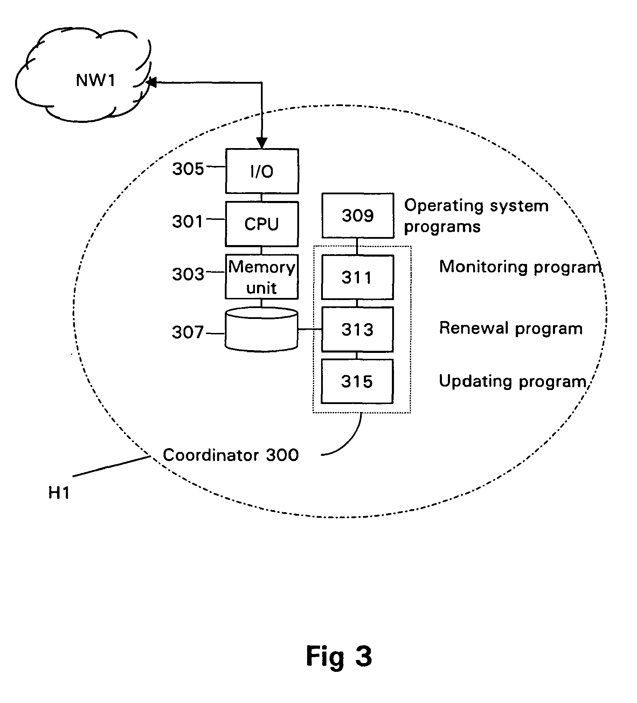

Referring to Figure 3, a first embodiment of the invention will now be discussed in more detail.

Figure 3 shows a dual stack host H1 comprising a central processing unit (CPU) 301, a memory unit 303, an input/output device 305 for connecting the host H1 to the network NW1, storage 307, and a suite of operating system programs 309, which control and coordinate low level operation of the host H1, and in particular handle operation of the lPv4 and lPv6 stacks. Such a configuration is well known in the art.

Generally embodiments of the invention are referred to as a coordinator 300, and comprise at least some of programs 311, 313, 315. These programs are stored on storage 307 and are processable by the CPU 301.

The programs include a program 311 for monitoring timer status; a program 313 for requesting renewal, or re-allocation, of allocated address; and a program 315 for updating the Border router BR with address allocation information.

The monitoring program 311 monitors the preferred and/or valid timers to identify expiry thereof, the renewal program 313 interacts with the DHCPv6 server 103 to request renewal of a previously allocated IPv4 address; and the updating program 315 informs the Border Router BR of any changes that have been made to address allocation and/or timer information.

As stated above, in one embodiment the coordinator 300 could be located on the dual stack host H1 that is requesting and receiving the address allocation information from the DHCPv6 server 103, in a second embodiment the coordinator 300 could be located on a controller device 107 (see Figure 1) dedicated to managing address allocation and re-allocation, which acts as a kind of broker between the dual stack host H1, the Border Router BR and the DHCPv6 server 103, and in a third embodiment the coordinator 300 could be located in the Border Router BR.

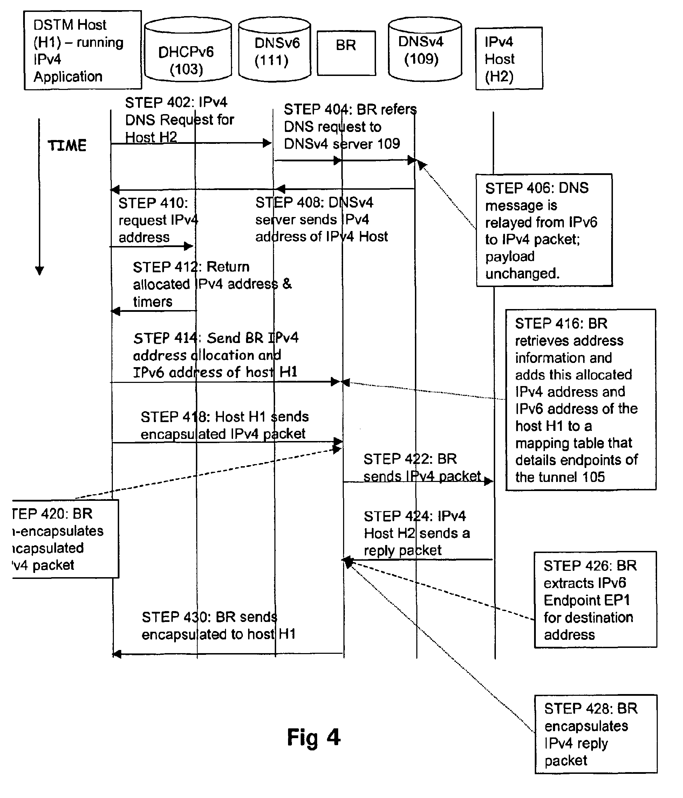

The operation of the coordinator 300, according to a first embodiment of the invention, will now be described with reference to the flowcharts shown in Figures 4 to 9. In the first embodiment the coordinator 300 is assumed to be located on the dual stack host H1.

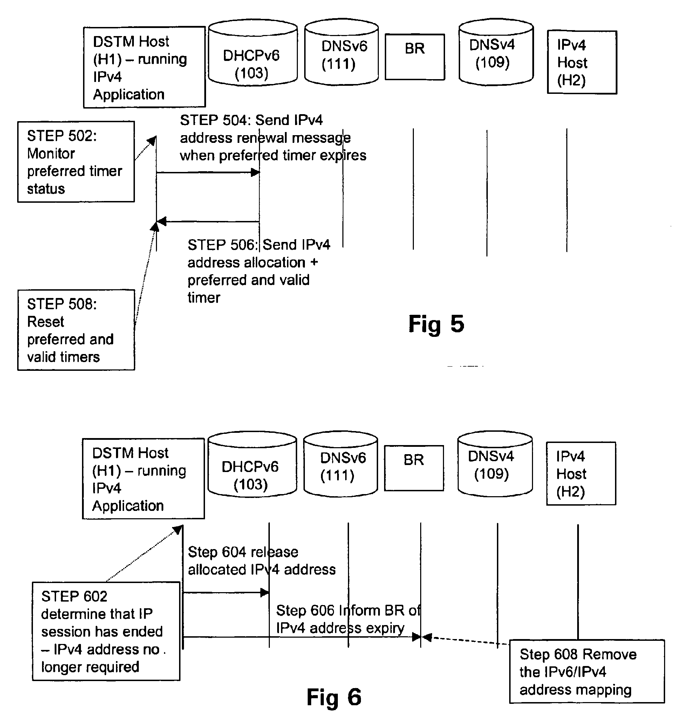

The functionality of the invention is easiest to describe in the context of an end-to-end communications process, so Figure 4 shows the steps involved in establishing communications between a dual stack host H1 in an lPv6 network and an lPv4 host H2, when communications are initiated by the dual stack host H1 . Most of these steps are standard and are disclosed in document draft-ietf-ngtrans-dstm-04.txt referred to above, while others utilise the functionality of the coordinator 300. Figures 5 and 6 show steps involved in subsequent management, by the coordinator 300, of the established communications, and illustrate the inventive concept of the present invention.

In Figures 4, 5 and 6 (and in subsequent figures presenting information in this form) the steps are enumerated, some being accompanied by an arrow. The start and finish of an arrow indicates respectively the initiator and recipient of the communication, and the vertical position of an arrow indicates the position of a step corresponding thereto in the temporal sequence of events.

Considering firstly Figure 4, dual stack host H1 sends 402, in lPv6 format, an lPv4 Domain Name Server (DNS) request for the IP address of the host H2 to a DNSv6 server 111 located in the lPv6 network NW1. The DNS request is forwarded onto the Border Router BR, which sends 404 the DNS request to a DNSv4 server 109. This step 404 involves "relaying" the packet from the Border Router to the DNSv4 server 109.

Relaying can be used in any of the following example situations: where lPv6 DNS records are held on an lPv4 DNS server; where lPv4 DNS records are held on an lPv6 DNS server; or where an lPv6 DNS message requires passage over an lPv4 network in order to reach an answering DNS server (i.e. relaying enables processing of disparate types of DNS requests). In the latter scenario, the DNS server could be an lPv4 server or an lPv6 server. In the current example, shown in Figure 4, relaying is being used so that a dual stack host can, via lPv6 DNS messages, access DNS records being held on an lPv4 DNS server 109.

The DNS request arriving at the Border Router BR from the dual stack host H1 has originated from an lPv4 application. Thus the DNS request has an lPv4 DNS payload (containing the domain name of the lPv4 host H2 with which the dual stack host H 1 wishes to communicate) and an IPv6 header, which is required to route. the packet through the first network NW1. The Border Router BR translates the received IPv6 packet header into an IPv4 header for onward routing in the second network NW2 to the IPv4 DNS server 109. During this translation process the payload remains unaltered.

Once the DNS message has arrived at the DNSv4 server 109, the DNSv4 server 109 retrieves 406 an lPv4 address corresponding to the lPv4 payload. The lPv4 DNS server 109 then creates and sends 408 a DNS response, which comprises the retrieved lPv4 payload (containing the lPv4 address of host H2 retrieved at step 406), stored within a packet containing an lPv4 header. Upon arrival at the Border Router BR, the header of the lPv4 DNS response packet is converted into to an lPv6 header for onward routing within the first network NW1. Again, during the translation process, the payload of the packet is unchanged. Once the lPv4 DNS response arrives at the dual stack host H1, the IPv4 application that initiated the DNS request will interpret the lPv4 DNS payload.

The dual stack host H1 1 then sends 410 a request to the DHCPv6 server 103 for an lPv4 address to be allocated to it, whereupon the DHCPv6 server 103 returns 412 an allocated lPv4 address together with a preferred and a valid timer. Typically the dual stack host H1 and DHCPv6 server 103 send request and response messages (steps 410 and 412 respectively) in accordance with the User Datagram Protocol (UDP), although an alternative protocol, such as Transmission Control Protocol (TCP), could be used.

Next the updating program 315 running on the dual stack host H1 sends 414 to the Border Router BR details of the lPv4 address that was returned from the DHCPv6 server 103 at step 412. This is the first operation performed by the coordinator 300, and essentially involves the updating program 315 sending a packet, preferably using the UDP protocol, to the Border Router BR. For example, the updating program 315 may send a copy of the response packet received at step 412 to the Border router BR.

The existing documentation relating to the DSTM procedure (draft-ietf-ngtrans-dstm-04.txt, referred to above) is silent as to whether timing of lPv4 address allocation information is an issue, and certainly does not suggest proactive communication of lPv4 address allocation information. Thus, if one were to operate a DSTM communications as per the standard documentation, the Border Router BR learns of the lPv4 allocated address when the dual stack host H1 sends a packet destined for an lPv4 host H2 in the lPv4 network NW2.

In embodiments of the present invention, because the dual stack host H1 sends (as described above at step 414) the Border Router BR a packet detailing the allocated IPv4 address in advance of sending a packet destined for the lPv4 host H2, the Border Router BR can set up the tunnel 105 in preparation for packets passing between the two hosts H1, H2.

On receipt of the address allocation message sent at step 414, the Border Router BR retrieves 416 address information therein and creates a mapping between the allocated lPv4 address and the IPv6 address of the dual stack host H1. This mapping is subsequently used to create the second endpoint EP2 of the tunnel 105.

After the dual stack host H1 has sent the address information to the Border Router (step 414), the host H 1 creates and sends 418 an encapsulated lPv4 data packet destined for host H2 in the lPv4 network. This data packet contains data from an IPv4 application running on the dual stack host H1, which has been encapsulated into an lPv6 packet for transmission over the lPv6 network. Such packet encapsulation is well known to those skilled in the art, and the reader is referred to RFC2893, available from the IETF, for more details.

Accordingly the dual stack host H1 sets, as a source-address of the outgoing encapsulated packet, the IPv6 address of the dual stack host H1, and as destination address of the encapsulated packet, the IPv6 address of the Border Router BR. The payload of this packet comprises an IPv4 packet having the IPv4 address allocated at step 412 as source address, and the IPv4 address returned by the DNSv4 server 109 at step 408 as destination address (i.e. IPv4 address of H2). Upon receipt of the encapsulated packet, the Border Router BR un-encapsulates 420 the received packet, and sends 422 the now lPv4 packet into the lPv4 network NW2.

Assuming the lPv4 host H2 sends 424 a reply packet having, as source address, the IPv4 address of the IPv4 host H2 and as destination address the IPv4 allocated address, such a reply packet will be received at the Border Router BR. In response to receipt of the reply packet, the Border Router BR retrieves 426 an lPv6 address corresponding to the lPv4 destination address of the received packet, by accessing tunnel information stored at step 416.

The Border Router BR subsequently encapsulates 428 the received packet using the retrieved lPv6 address as destination address and the lPv6 address of the Border Router BR as source address. The packet is then sent 430 into the lPv6 network whereupon it is received by the dual stack host H1.

Data can be continually transmitted between the dual stack host H1 and the lPv4 host H2, according to steps 418 - 430, provided the tunnel 105, and thus the lPv4 address allocated to the dual stack host H1, is active. As stated above, when the DCHPv6 server 103 allocates an IPv4 address to a requesting dual stack host, it sends a DCHPv6 response message, which includes the allocated IPv4 address and preferred and valid timers. The preferred timer starts decrementing as soon as the address is allocated to the dual stack host H1 (step 412), so for communications to continue past expiry of the preferred timer, the corresponding address allocation and timers require renewing. Failure to renew the address allocation and timers results in expiry of the lPv4 address allocation and removal of the tunnel 105 (this is described later).

This renewal process is handled by the coordinator 300 as is shown in Figure 5. Typically the allocated lPv4 address is applied to a particular interface on the dual stack host H1 (referred to herein as the encapsulating interface), so that all outgoing and incoming IPv4 encapsulated packets pass through this interface. The monitoring program 311 is arranged to monitor 502 both the count down of the preferred timer and packets arriving at the encapsulating interface, so that, if the preferred timer has expired, and, for example an outgoing IPv4 packet arrives at the encapsulating interface, this triggers the renewal program 313 to request 504 renewal of the previously allocated lPv4 address from the DHCPv6 server 103.

Alternatively the allocated address can be stored in an address allocation database (not shown), with a flag indicating the status thereof. At step 502, the monitoring program 311 1 could decrement both the preferred timer and valid timer, whilst continually checking whether or not they have expired. Once the preferred timer is identified to have timed out, the monitoring program 311 could check the status of the allocated address in the address allocation database, and, should the status of the flag indicate that communications are to continue, the renewal program 313, at step 504, could request renewal of the said previously allocated lPv4 address. The flag can be modified by applications running on the dual stack host H1. If the flag does not indicate that communication are to continue, the flag may be monitored by 311 continuously until the valid timer is identified to have timed out. If at any point prior to valid timer expiry, the flag indicates that communications are to continue, the renewal program 313, at step 504, could request renewal of the said previously allocated lPv4 address.

The flag could be modified in response to receipt of an lPv4 packet arriving at the encapsulating interface or in response to creation of an lPv4 TCP or UDP socket on the host H1.

In response to receipt of a renewal request, the DHCPv6 server 103 sends 506 the renewed allocated lPv4 address, together with reset preferred and valid timers, to the dual stack host H1. These are received by the monitoring program 311, which sets 508 the preferred and valid timers held on the dual stack host H1 to the timer values sent at step 506. This process (steps 502 - 508) continues indefinitely, provided at least one application on the dual stack host H1 requires a communication path to the lPv4 network (or the status of the flag in the address allocation database indicates that communications should continue).

In this embodiment, the dual stack host H1 only needs to communicate with the Border Router BR if the allocated lPv4 address is not renewed - i.e. if the tunnel 105 is to be broken. Thus for this embodiment, the renewal process does not involve communication with the Border Router BR.

If none of the application programs require renewal of the allocated IPv4 address (or if the flag in the address allocation database is set to null for whatever reason), then when the preferred timer expires, the monitoring program 311 triggers 602 release of the allocated IPv4 address. This release can be effected in one of two ways: referring to Figure 6, either the renewal program 313 sends 604 a release message to the DHCPv6 server 103, or the dual stack host H1 waits for the valid timer to expire (recall that on expiry of the *valid* timer, allocation of the allocated IPv4 address is automatically annulled).

In either case, the updating program 315 sends 606 a release message to the Border Router BR, whereupon the Border Router BR removes 608 the mapping stored at step 416. This has the effect of removing the tunnel 105 between the dual stack host H1 and the Border Router BR.

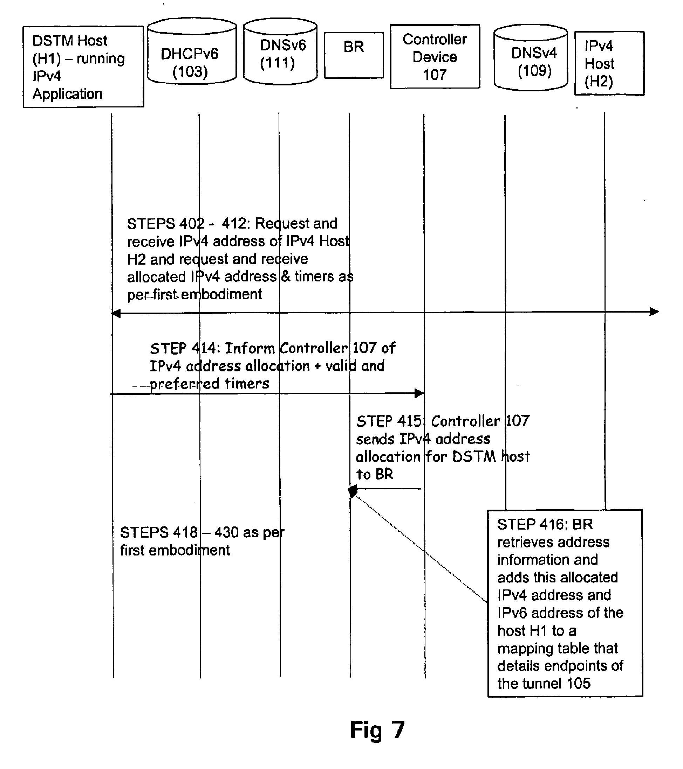

As stated above, the coordinator 300 could alternatively be stored on, and run from, either an independent controller device 107 or the Border Router BR. Figures 7 - 10 show allocation, renewal and release processes when controlled by the controller device 107. This embodiment is generally similar to the first embodiment described with reference to Figures 1 - 6, so that, in Figures 7 - 10, like parts have been given like reference numerals and will not be described further in detail.

Referring first to Figure 7, steps 402- 412 are identical to those described above. Thereafter dual stack host H1 sends 414 the controller 107 details of the allocated lPv4 address and the preferred and valid timers, whereupon the controller 107 sends 415 the allocated lPv4 address to the Border Router BR to enable the Border Router BR to create the tunnel 105, at step 416. Subsequent steps progress as per the first embodiment.

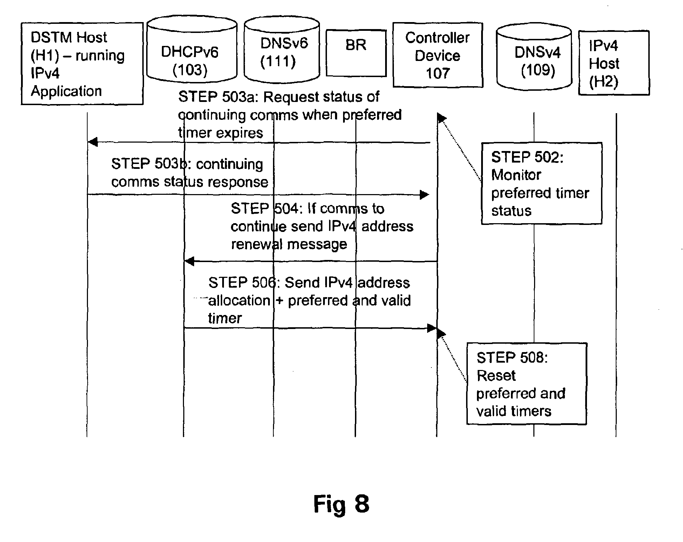

Renewal of the preferred timer is shown in Figure 8: the monitoring program 311 (running on the controller 107) monitors 502 the count down of the preferred timer. When the preferred timer has expired, the controller 107 sends 503a a message to the dual stack host H1 asking whether the IPv4 address should be renewed. If it receives 503b a positive response from the dual stack host H 1, the renewal program 313 requests renewal 504 of the previously allocated lPv4 address from the DHCPv6 server 103. As for the first embodiment, the dual stack host H1 could have an address allocation database where the allocated address and a flag, indicating the status of the allocation, are stored. Thus step 503a could involve querying the flag status stored in the said address allocation database.

In response, the DHCPv6 server 103 sends 506 the renewed allocated lPv4 address, together with new preferred and valid timers, to the controller 107. These are received by the monitoring program 311, which sets 508 the preferred and valid timers held on the controller 107 to the timer values sent at step 506. This process (steps 502 - 508) continues indefinitely, provided at least one application on the dual stack host H1 requires a communication path to the lPv4 network.

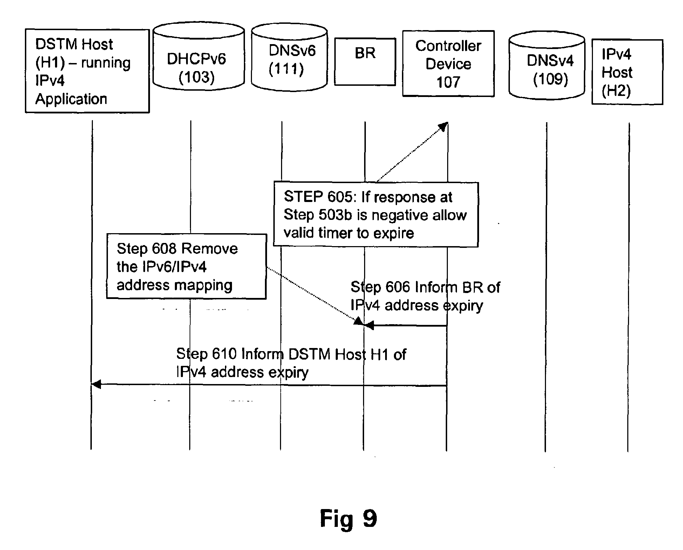

Referring to Figure 9, if the response sent at step 503b is negative, meaning, for example, that none of the applications running on the dual stack host H1 require communications with the IPv4 network, the monitoring program 311 1 allows the valid timer to elapse 605. Once the valid timer has elapsed, the updating program 315 sends 606 a release message to the Border Router BR, whereupon the Border Router BR removes 608 the mapping stored at step 416. In addition, the updating program 315 sends 610 a message to the dual stack host H1, informing the dual stack host H1 that the allocated lPv4 address is no longer valid, whereupon the host H1 removes the allocated lPv4 address from its internally maintained address tables. This has the effect of removing the tunnel 105 between the dual stack host H1 and the Border Router BR.

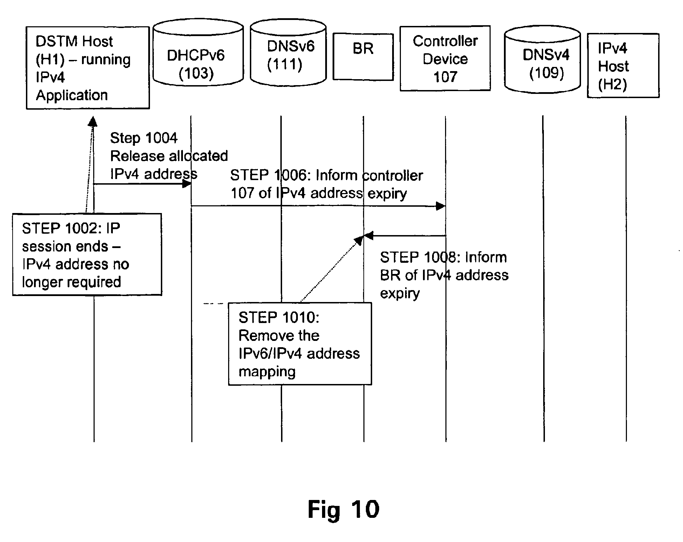

Alternatively, as is shown in Figure 10, the dual stack host H1 can proactively inform 1002, 1004 the DHCPv6 server that the allocated lPv4 address is no longer required. In this case, the DHCPv6 server 103 informs 1006 the controller 107 of the said expiry, whereupon the updating program 315 sends 1008 a release message to the Border Router BR. As shown in Figures 8 and 9, on receipt of the release message, the Border Router BR removes 1010 the mapping stored at step 416.

If the coordinator 300 were to be located on the Border Router BR (not shown), step 414 would involve sending lPv4 address allocation and timer information directly to the Border Router BR, as shown in Figure 4, and management of address and timer information would be monitored and renewed by the coordinator 300 as shown in Figures 8, 9 and 10, but with the relevant processes running on the border router BR.

As a further alternative, the coordinator 300 could run on the DHCPv6 server 103, so that the DHCPv6 server 103 essentially acts as controller 107. In this arrangement the steps performed by the renewal program 313, such as step 504 shown in Figure 8, would be internally run processes.

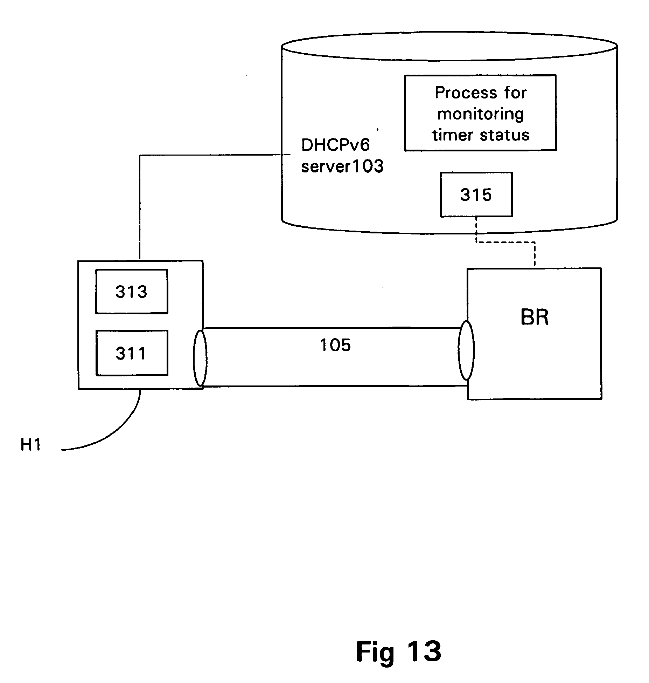

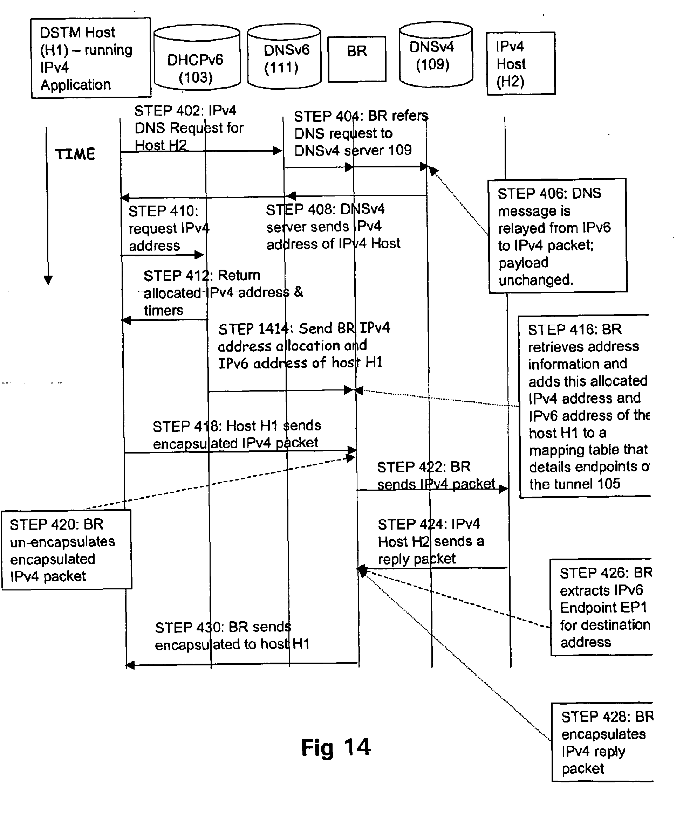

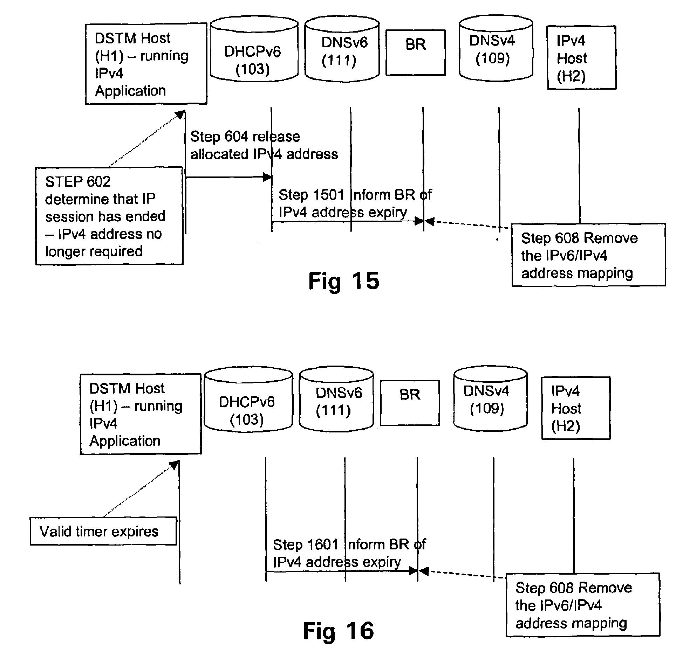

As a yet further alternative, the coordinator 300 could be distributed between the host H1 and the DHCPv6 server 103, as shown in Figure 13; the process steps associated with allocation and renewal of an allocated lPv4 address then progress as shown in Figures 14 and 15 (which correspond, respectively, to Figures 4 and 6). Referring firstly to Figure 13, the monitoring and renewing programs 311, 313 are run on the host H 1, while the updating program 315 runs on the DHCPv6 server 103. Thus the only device that interacts with the Border Router BR is the DCHPv6 server 103.

Turning now to Figure 14, steps 402 - 410 progress as per the first embodiment. Then, at step 1401, the updating program 315 running on the DHCPv6 server 103 sends the Border Router BR a packet comprising the IPv4 address that the DHCPv6 server 103 sent to the host H1 at step 412, together with the lPv6 address of the host H1. The Border Router BR then retrieves 416 address information in the packet and creates a mapping between the allocated lPv4 address and the IPv6 address of the dual stack host H1. Steps 418 - 430 progress as per the first embodiment.

As stated above, the monitoring and renewing programs 311, 313 run on the host H1 in this embodiment; once the host H1 has received, at step 412, its allocated lPv4 address and timer information, the monitoring program 311 monitors countdown of the preferred timer, as per the first embodiment, so that renewal of the timers proceeds as described in Figure 5 (steps 502 - 508). However, when the host is ready to release the allocated IPv4 address, the DHCPv6 server 103 communicates a release message to the Border Router. This is shown in Figure 15, where it can be seen that, in response to receipt of a release message from the host H1 (step 604), the updating program 315 running on the DHCPv6 server 103 informs 1501 the Border Router BR of the address expiry.

Figure 16 shows an alternative scenario, where the allocated lPv4 address is released by default due to expiry of the valid timer. Since the timers are sent out from the DHCPv6 server 103 when allocating an lPv4 address (step 412), the status of the preferred and valid timers is also observed by a process running on the DHCPv6 server 103. Accordingly, in the event that the DHCPv6 server 103 does not receive a request for renewal of the allocated address (as per Figure 5), it waits for the valid time to expire and then informs 1601 the Border Router BR that the allocated address is no longer valid for host H1. The Border Router BR then deletes the mapping corresponding thereto, as described at step 608 in the context of the first embodiment.

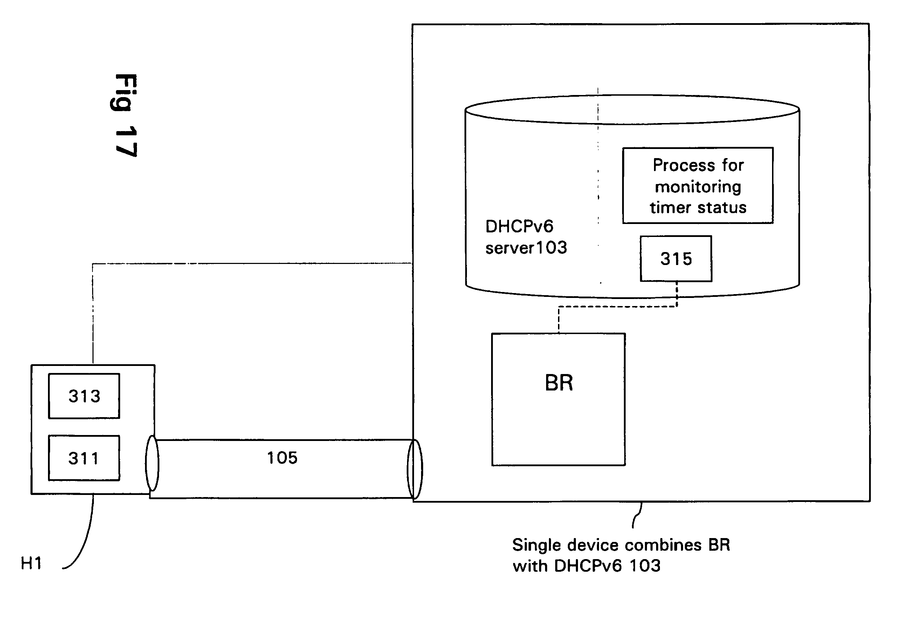

Figure 17 shows an arrangement whereby the Border Router BR and DHCPv6 server 103 are combined within a single device. Since the complexity of a network manager's job scales with number of devices that require managing, this arrangement has the advantage of reducing the overhead associated with DSTM network management. In particular, as the DHCPv6 server 103 is essentially a pool of lPv4 addresses, combining the functionality of the Border Router BR and DHCPv6 server 103 in one device reduces the overhead associated with management of the address pool. In addition, this arrangement is convenient for processing of packets by the Border Router BR because it needs to store, or have access to, a list of lPv4 addresses that have been allocated by the DHCPv6 server 103 in order to detect (and process) packets using these allocated addresses.

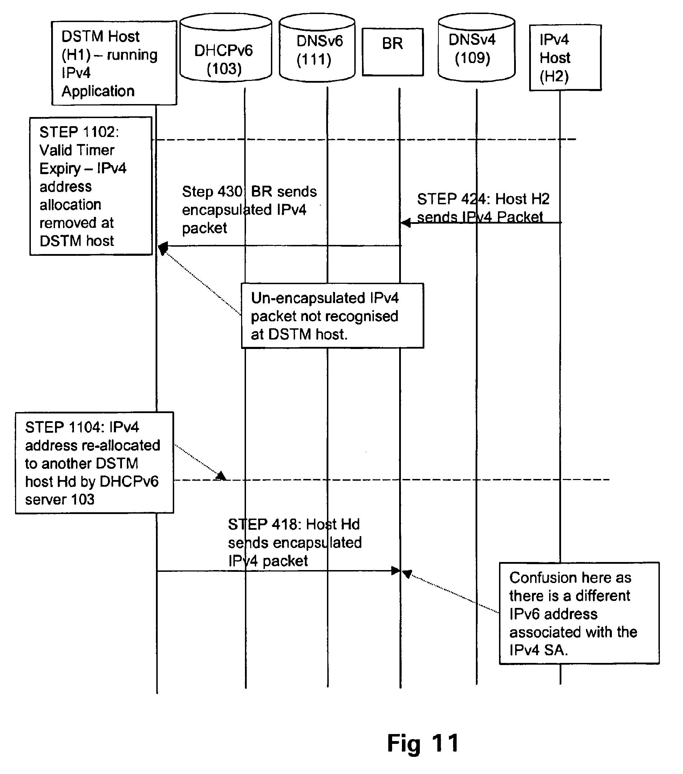

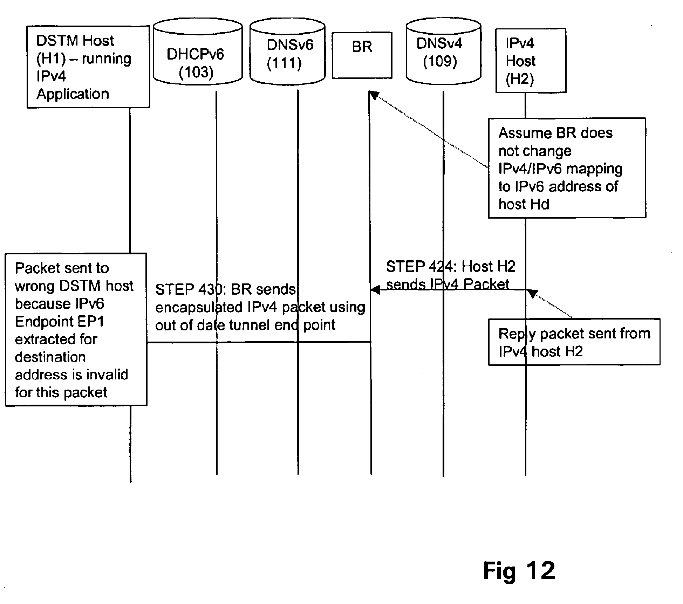

Additional advantages of embodiments of the invention can be seen with reference to Figures 11 and 12, which show operation of the dual stack host H1, DHCPv6 server 103, and border router BR in the absence of the coordinator 300. As for Figures 7-10, parts and steps that are common between the first embodiment and Figures 11 and 12 (communications in the absence of coordination) are not described further in detail.

Figure 11 shows the situation post expiry of the valid timer, where the lPv4 address allocated to the dual stack host H1 has been released 1102. If the IPv4 host H2 subsequently sends, at step 424, a packet to the dual stack host H1, using the previously valid allocated lPv4 address as destination address, the Border Router BR will proceed to encapsulate 426 the received packet (as described above with reference to Figure 4), and send 430 the encapsulated packet to the dual stack host H 1. Once the packet arrives at the dual stack host H1, then because the dual stack host H1 has released this allocated IPv4 address, none of the interfaces on the dual stack host H1 recognise the IPv4 address of the packet, and the packet will thus be dropped.

Conversely, with embodiments of the invention, the Border Router BR will be informed of the release of allocated lPv4 addresses, whereupon the tunnel 105 will be removed. Any packets subsequently arriving at the Border Router BR with a destination address of the released lPv4 address will thereafter be dropped at the router BR.

In a second scenario, also shown in Figure 11, the released IPv4 address is subsequently allocated 1104 to another dual stack host Hd by the DHCPv6 server 103, whereupon the other dual stack host Hd creates an encapsulated IPv4 packet (step 418) using allocated IPv4 address, and sends the encapsulated packet into the IPv6 network NW1 (recall that without functionality of embodiments of the invention the Border Router BR is a) unaware of the release of the allocated IPv4 address by the dual stack host H1 and is b) unaware of the subsequent allocation to the other dual stack host Hd).

When the packet arrives at the Border Router BR, there is confusion because the lPv6 address (source address of the encapsulated packet, here the other dual stack host Hd) does not match the source address expected by the Border Router (the lPv6 address of dual stack host H1 that was stored previously). With standard DSTM methods, the Border Router BR is likely to replace any existing endpoint EP2 mapping with a new mapping between this lPv6 address and the allocated lPv4 address. This approach can have serious security implications, not least because the Border Router BR has no means of assessing "correct" IPv4 address allocation.

Essentially, the Border Router BR has no way of knowing whether the dual stack host H1 has in fact released the allocated lPv4 address. It could be, e.g. that the other dual stack host Hd is spoofing the allocated lPv4 address in an attempt to intercept packets destined for another dual stack host in the network NW1. Clearly in this situation the Border Router BR should not alter the endpoint EP2 mapping, but, without embodiments of the invention, the Border Router BR is likely to alter the endpoint EP2 mapping, thereby allowing dual stack host Hd access to data that is destined for another dual stack host.

A third scenario, shown in Figure 12, is an alternative to the situation described above, where the Border Router BR modifies the endpoint EP2 mapping upon receipt of a packet from the other dual stack host Hd. Figure 12 is thus representative of a case where, upon receipt of a packet from the other dual stack host Hd, the Border Router BR does not change the mapping between dual stack host and allocated lPv4 address. However, this action, on the part of the Border Router BR, also incurs problems - clearly the Border Router BR should modify the endpoint mapping when other dual stack host Hd has legitimately been allocated that lPv4 address.

As a result of the Border Router BR failing to modify the endpoint EP2 mapping, when packets arrive at the Border Router BR from the lPv4 host in the second network NW2, the Border Router BR will encapsulate the received packets using an out of date lPv6 destination address, so that the packets will arrive at the wrong dual stack host H1.

The scenarios discussed above and shown in Figures 11 and 1 2 thus show that without some kind of address allocation coordination mechanism, packets can get dropped, snooped, and misdirected, which generates additional network traffic and increases the possibility of security problems. Embodiments of the present provide such a coordination mechanism, and thereby provide an improved solution to management of packet routing for the DSTM migration method.

In fact, embodiments of the invention could be applied to any communications method in which:
- addresses are allocated dynamically;
- the allocated address can be allocated to one of a plurality of machines; and
- the allocated address is used to route data within a network.

As will be understood by those skilled in the art, the invention described above may be embodied in one or more computer programs. These programs can be contained on various transmission and/or storage mediums such as a floppy disc, CD-ROM, or other optically readable medium, or magnetic tape so that the programs can be loaded onto one or more general purpose computers or could be downloaded over a computer network using a suitable transmission medium.

The programs 311, 313, 315 of the present invention are -conveniently written using the C programming language, but it is to be understood that this is inessential to the invention.

## Claims

1. A method of coordinating address allocation events at a routing device (BR) and at a host machine (H1), the routing device being arranged to route data between the host machine and at least one other host machine (H2), in which the host machine is located in a first network (NW1), the first network operating in accordance with a first transmission protocol, and in which the other host machine (H2) is located in a second network (NW2), the second network operating in accordance with a second transmission protocol, and wherein the host machine is operable to process packets of data corresponding to either transmission protocols,
the method comprising the steps of:
(i) (402) receiving an allocated address, for use by the host machine (H1) in communicating with the other host machine (H2);
(ii) (412) receiving an indicator representative of allocation status of the allocated address;
(iii) (414) sending, to the routing device (BR), the allocated address together with the address of the host machine (H1) ;
(iv) (416) storing a mapping between the allocated address and the address of the host machine; **characterised by**
(v) (502) monitoring the indicator, and, if the indicator indicates that the allocated address is no longer valid for the host machine (H1), alerting the routing device of changes to the indicator and upon receipt of the alert, the routing device (BR) rendering the stored mapping unusable (606).

2. A method according to claim 1, including using the mapping to establish a tunnel (105) between the routing device (BR) and the host machine (H1), the tunnel being used in the said routing of data between the host machine (H1) and the other host machine (H2).

3. A method according to any one of the preceding claims, wherein the indicator includes a timer and the method includes (502) requesting renewal of the allocated address in the event that the indicator indicates that allocation of the allocated address to the host machine (H1) has expired.

4. A method according to claim 3, including (503) checking at least one interface of the host (H1) in order to determine whether the allocated address is to be renewed.

5. A method according to any one of claims 1 to 3, wherein the indicator includes a communication status and the method includes (503b) checking the communication status in order to determine whether the allocated address is to be renewed.

6. A method according to any one of the preceding claims, in which the rendering step (606) causes the stored mapping to be deleted (608).

7. System for coordinating address allocation events at a routing device (BR) and at a host machine (H1), the system including a host machine (H1), at leat one other host machine (H2) and a routing device (BR), the routing device being arranged to route data between the host machine (H1) and the at least one other host machine (H2), in which the host machine is located in a first network (NW1), the first network operating in accordance with a first transmission protocol, and in which the other host machine (H2) is located in a second network (NW2), the second network operating in accordance with a second transmission protocol, and wherein the host machine is operable to process packets of data corresponding to either transmission protocol,
the system comprising
(a) Receiving means (311) arranged to receive an allocated address, for use by the host machine (H1) in communicating with the other host machine (H2), and to receive an indicator representative of allocation status of the allocated address;
(b) means (301,305) arranged to send the allocated address together with the address of the host machine to the routing device (BR);
(c) monitoring means (311) arranged to monitor the indicator,
wherein the routing device (BR) is arranged, upon receipt of the allocated address, to store a mapping between the allocated address and the address of the host machine(H1), **characterised in that** the monitoring means (311) is adapted to alert the routing device (BR) of changes to the indicator and the routing device (BR) is adapted to, upon receipt of the alert, render the stored mapping unusable.

8. System according to claims 7, wherein the routing device (BR) is arranged to remove the stored mapping upon receipt of the alert.

9. System according to any one of claims 7 or 8, in which the indicator involves a timer, and the allocated address is deemed to be invalid for the host machine (H1) when the timer has expired.

10. System according to any one of claims 7 to 9, in which the host machine (H1) is operable to process at least one application in accordance with the second transmission protocol.

11. A system for managing networks including a system according to any one of claims 7 to 10.

## Patentansprüche

1. Verfahren zum Koordinieren von Adressenzuweisungsereignissen bei einer Routing-Vorrichtung (BR) und bei einer Host-Maschine (H1), wobei die Routing-Vorrichtung so beschaffen ist, dass sie Daten zwischen der Host-Maschine und wenigstens einer anderen Host-Maschine lenkt, wobei sich die Host-Maschine in einem ersten Netz (NW1) befindet, das in Übereinstimmung mit einem ersten Übertragungsprotokoll arbeitet, und wobei sich die andere Host-Maschine (H2) in einem zweiten Netz (NW2) befindet, das in Übereinstimmung mit einem zweiten Übertragungsprotokoll arbeitet, und wobei die Host-Maschine so betreibbar ist, dass sie Datenpakete, die beiden Übertragungsprotokollen entsprechen, verarbeitet,
wobei das Verfahren die folgenden Schritte umfasst:
(i) (402) Empfangen einer zugewiesenen Adresse für die Verwendung durch die Host-Maschine (H1) bei der Kommunikation mit der anderen Host-Maschine (H2);
(ii) (412) Empfangen eines Indikators, der einen Zuweisungsstatus der zugewiesenen Adresse repräsentiert;
(iii) (414) Senden der zugewiesenen Adresse zusammen mit der Adresse der Host-Maschine (H1) zu der Routing-Vorrichtung (BR);
(iv) (416) Speichern einer Abbildung zwischen der zugewiesenen Adresse und der Adresse der Host-Maschine; **gekennzeichnet durch**
(v) (502) Überwachen des Indikators und, falls der Indikator angibt, dass die zugewiesene Adresse für die Host-Maschine (H1) nicht länger gültig ist, Warnen der Routing-Vorrichtung vor Änderungen an dem Indikator, wobei die Routing-Vorrichtung (BR) bei Empfang der Warnung die gespeicherte Abbildung unnutzbar macht (606).

2. Verfahren nach Anspruch 1, das das Verwenden der Abbildung, um einen Tunnel (105) zwischen der Routing-Vorrichtung (BR) und der Host-Maschine (H1) aufzubauen, umfasst, wobei der Tunnel bei der Lenkung von Daten zwischen der Host-Maschine (H1) und der anderen Host-Maschine (H2) verwendet wird.

3. Verfahren nach einem der vorhergehenden Ansprüche, bei dem der Indikator einen Zeitgeber enthält und das Verfahren das Anfordern einer Erneuerung der zugewiesenen Adresse in dem Fall umfasst (502), in dem der Indikator angibt, dass die Zuweisung der zugewiesenen Adresse zu der Host-Maschine (H1) abgelaufen ist.

4. Verfahren nach Anspruch 3, das das Prüfen wenigstens einer Schnittstelle des Host (H1) umfasst (503), um zu bestimmen, ob die zugewiesene Adresse zu erneuern ist.

5. Verfahren nach einem der Ansprüche 1 bis 3, bei dem der Indikator einen Kommunikationsstatus enthält und das Verfahren das Prüfen des Kommunikationsstatus umfasst (503b), um zu bestimmen, ob die zugewiesene Adresse zu erneuern ist.

6. Verfahren nach einem der vorhergehenden Ansprüche, bei dem der Schritt des Unnutzbarmachens (606) bewirkt, dass die gespeicherte Abbildung gelöscht wird (608).

7. System zum Koordinieren von Adressenzuweisungsereignissen bei einer Routing-Vorrichtung (BR) und einer Host-Maschine (H1), wobei das System eine Host-Maschine (H1), wenigstens eine andere Host-Maschine (H2) und eine Routing-Vorrichtung (BR) umfasst, wobei die Routing-Vorrichtung so beschaffen ist, dass sie Daten zwischen der Host-Maschine (H1) und der wenigstens einen anderen Host-Maschine (H2) lenkt, wobei sich die Host-Maschine in einem ersten Netz (NW1) befindet, das in Übereinstimmung mit einem ersten Übertragungsprotokoll arbeitet, und wobei sich die andere Host-Maschine (H2) in einem zweiten Netz (NW2) befindet, das in Übereinstimmung mit einem zweiten Übertragungsprotokoll arbeitet, und wobei die Host-Maschine so betreibbar ist, dass sie Datenpakete, die beiden Übertragungsprotokollen entsprechen, verarbeitet,
wobei das System umfasst:
(a) Empfangsmittel (311), die so beschaffen sind, dass sie eine zugewiesene Adresse empfangen, die für die Host-Maschine (H1) bei der Kommunikation mit der anderen Host-Maschine (H2) verwendet werden kann, und einen Indikator empfangen, der den Zuweisungsstatus- der zugewiesenen Adresse repräsentiert;
(b) Mittel (301, 305), die so beschaffen sind, dass sie die zugewiesene Adresse zusammen mit der Adresse der Host-Maschine zu der Routing-Vorrichtung (BR) schicken;
(c) Überwachungsmittel (311), die so beschaffen sind, dass sie den Indikator überwachen;
wobei die Routing-Vorrichtung (BR) so beschaffen ist, dass sie bei Empfang der zugewiesenen Adresse eine Abbildung zwischen der zugewiesenen Adresse und der Adresse der Host-Maschine (H1) speichert, **dadurch gekennzeichnet, dass** die Überwachungsmittel (311) so beschaffen sind, dass sie die Routing-Vorrichtung (BR) vor Änderungen an dem Indikator warnen, und die Routing-Vorrichtung (BR) so beschaffen ist, dass sie bei Empfang der Warnung die gespeicherte Abbildung unnutzbar macht.

8. System nach Anspruch 7, bei dem die Routing-Vorrichtung (BR) so beschaffen ist, dass ie bei Empfang der Warnung die gespeicherte Abbildung entfernt.

9. System nach einem der Ansprüche 7 oder 8, bei dem der Indikator einen Zeitgeber enthält und die zugewiesene Adresse als ungültig für die Host-Maschine (H1) angesehen wird, wenn der Zeitgeber abgelaufen ist.

10. System nach einem der Ansprüche 7 bis 9, bei dem die Host-Maschine (H1) so betreibbar ist, dass sie wenigstens eine Anwendung in Übereinstimmung mit dem zweiten Übertragungsprotokoll verarbeitet.

11. System für das Management von Netzen, das ein System nach einem-der Ansprüche 7 bis 10 enthält.

## Revendications

1. Procédé de coordination d'événements d'allocation d'adresse au niveau d'un dispositif de routage (BR) et au niveau d'une machine hôte (H1), le dispositif de routage étant agencé pour router des données entre la machine hôte et au moins une autre machine hôte (H2), dans lequel la machine hôte est située dans un premier réseau (NW1), le premier réseau fonctionnant conformément à un premier protocole de transmission, et dans lequel l'autre machine hôte (H2) est située dans un second réseau (NW2), le second réseau fonctionnant conformément à un second protocole de transmission, et dans lequel la machine hôte peut être mise en oeuvre pour traiter des paquets de données correspondant à l'un ou l'autre des protocoles de transmission,
le procédé comprenant les étapes consistant à :
(i) (402) recevoir une adresse allouée, à utiliser par la machine hôte (H1) lors d'une communication avec l'autre machine hôte (H2),
(ii) (412) recevoir un indicateur représentatif d'un état d'allocation de l'adresse allouée,
(iii) (414) envoyer, au dispositif de routage (BR), l'adresse allouée en même temps que l'adresse de la machine hôte (H1),
(iv) (416) mémoriser un mappage entre l'adresse allouée et l'adresse de la machine hôte, **caractérisé par**
(v) (502) le fait de surveiller l'indicateur, et, si l'indicateur indique que l'adresse allouée n'est plus valide pour la machine hôte (H1), le fait d'alerter le dispositif de routage de changements de l'indicateur, et, à la réception de l'alerte, le fait que le dispositif de routage (BR) rend le mappage mémorisé inutilisable (606).

2. Procédé selon la revendication 1, comprenant l'utilisation du mappage pour établir un tunnel (105) entre le dispositif de routage (BR) et la machine hôte (H1), le tunnel étant utilisé dans ledit routage de données entre la machine hôte (H1) et l'autre machine hôte (H2).

3. Procédé selon l'une quelconque des revendications précédentes, dans lequel l'indicateur comprend un temporisateur et le procédé comprend (502) le fait de demander un renouvellement de l'adresse allouée dans le cas où l'indicateur indique que l'allocation de l'adresse allouée à la machine hôte (H1) a expiré.

4. Procédé selon la revendication 3, comprenant (503) la vérification d'au moins une interface de l'hôte (H1) pour déterminer si l'adresse allouée doit être renouvelée.

5. Procédé selon l'une quelconque des revendications 1 à 3, dans lequel l'indicateur comprend un état de communication et le procédé comprend (503b) la vérification de l'état de communication pour déterminer si l'adresse allouée doit être renouvelée.

6. Procédé selon l'une quelconque des revendications précédentes, dans lequel l'étape consistant à rendre le mappage mémorisé inutilisable (606) amène le mappage mémorisé à être supprimé (608).

7. Système de coordination d'événements d'allocation d'adresse au niveau d'un dispositif de routage (BR) et au niveau d'une machine hôte (H1), le système comprenant une machine hôte (H1), au moins une autre machine hôte (H2) et un dispositif de routage (BR), le dispositif de routage étant conçu pour router des données entre la machine hôte (H1) et la au moins une autre machine hôte (H2), dans lequel la machine hôte est située dans un premier réseau (NW1), le premier réseau fonctionnant conformément à un premier protocole de transmission, et dans lequel l'autre machine hôte (H2) est située dans un second réseau (NW2), le second réseau fonctionnant conformément à un second protocole de transmission, et dans lequel la machine hôte peut être mise en oeuvre pour traiter des paquets de données correspondant à l'un ou l'autre protocole de transmission,
le système comprenant
(a) un moyen de réception (311) agencé pour recevoir une adresse allouée, à utiliser par la machine hôte (H1) dans une communication avec l'autre machine hôte (H2) et pour recevoir un indicateur représentatif d'un état d'allocation de l'adresse allouée,
(b) un moyen (301, 305) agencé pour envoyer l'adresse allouée en même temps que l'adresse de la machine hôte au dispositif de routage (BR),
(c) un moyen de surveillance (311) agencé pour surveiller l'indicateur,
dans lequel le dispositif de routage (BR) est agencé, à la réception de l'adresse allouée, pour mémoriser un mappage entre l'adresse allouée et l'adresse de la machine hôte (H1), **caractérisé en ce que** le moyen de surveillance (311) est conçu pour alerter le dispositif de routage (BR) de changements de l'indicateur, et le dispositif de routage (BR) est conçu pour, à la réception de l'alerte, rendre le mappage mémorisé inutilisable.

8. Système selon la revendication 7, dans lequel le dispositif de routage (BR) est conçu pour éliminer le mappage mémorisé à la réception de l'alerte.

9. Système selon l'une quelconque des revendications 7 ou 8, dans lequel l'indicateur implique un temporisateur, et l'adresse allouée est considérée être invalide pour la machine hôte (H1) lorsque le temporisateur a expiré.

10. Système selon l'une quelconque des revendications 7 à 9, dans lequel la machine hôte (H1) peut être mise en oeuvre pour traiter au moins une application conformément au second protocole de transmission.

11. Système de gestion de réseaux comprenant un système selon l'une quelconque des revendications 7 à 10.
